# EUROPEAN PATENT SPECIFICATION

(11) **EP 1 884 421 B1**
(45) Date of publication and mention of the grant of the patent: **08.10.2008**
(21) Application number: 06016382.1
(22) Date of filing: 04.08.2006
(51) Int. Cl.: B60R 25/04

(54) **Method and system for processing voice commands in a vehicle enviroment**
Methode und System zur Verarbeitung von Stimmkommandos in einer Fahrzeugumgebung
Méthode et système pour le traitement de la voix dans l'environnement d'un véhicule

(43) Date of publication of application: 06.02.2008
(73) Proprietor: Harman Becker Automotive Systems GmbH, 76307 Karlsbad (DE)
(72) Inventor: Haulik, Tim, 89143 Blaubeuren (DE); Buck, Markus, 88400 Biberach (DE); Köpf, Hans-Jörg, 73340 Amstetten (DE)
(74) Representative: Bertsch, Florian Oliver

(56) References cited:
- EP-A1- 0 100 773
- WO-A-01/07281
- DE-A1- 2 317 384

## Description

The invention relates to a method and a system for processing voice commands in a vehicle environment and to a motor vehicle equipped with said system. In particular, the invention relates to a method and system which offer improved robustness with respect to disturbances present in the vehicle environment.

For vehicle applications voice control systems have been developed which allow for controlling vehicle functions by means of voice commands. Corresponding vehicle functions may relate to a vehicle telephone system, a vehicle radio or a vehicle navigation system, i.e. vehicle functions controlled from within the vehicle cabin. Such a system is known from, for example, EP-A-0 100 773.

For some applications, it may also be desirable to control vehicle functions from outside the vehicle, i.e. from the vehicle environment. One example for such a vehicle function is to control opening and closing of a back door, i.e. the lift gate or tail gate by means of a voice command, so as to facilitate loading and unloading of the vehicle.

However, in the vehicle environment the recognition of voice commands is seriously affected by noise present in the vehicle environment. Moreover, the source of the noise present in the vehicle environment may be non-stationary, such as passing vehicles or people. Typical sources of noise in the vehicle environment are wind and rain, other vehicles or people.

The noise present in the vehicle environment may lead to a false detection of voice commands, may reduce the reliability of the detection of voice commands, or may even make the detection of voice commands impossible.

Accordingly, a need exists to improve the detection and processing of sound signals detected from the vehicle environment so as to reliably identify a voice command. This need is met by a method for processing voice commands in a vehicle environment according to independent claim 1 and by a system for processing voice commands in a vehicle environment according to independent claim 16. The dependent claims define preferred and advantageous embodiments of the invention.

According to one aspect of the invention, a method for processing voice commands in a vehicle environment comprises detecting a sound signal in the vehicle environment and identifying a voice command, which originates from a vehicle user, in the detected sound signal, taking into account a position information relating to the position of the vehicle user in the vehicle environment. The voice command is preferably used to control a vehicle function. By this means, it is possible to significantly reduce the influence of noise present in the vehicle environment. In particular, the information concerning the position of the vehicle user generally allows for distinguishing between signal components originating from the vehicle user and other signal components, i.e. noise. The information relating to the position of the vehicle user can be taken into account in the process of detecting the sound signal, e.g. by suppressing sound signals originating from other positions than the position of the vehicle user, and/or in the process of identifying the voice command, e.g. by correlating the detected sound signal with the information concerning the position of the vehicle user.

According to an embodiment, the method further comprises detecting the position of the vehicle user so as to obtain the information relating to the position of the vehicle user. The position of the vehicle user may be detected on the basis of acoustical signals, e.g. by using a microphone array for detecting the sound signal. In a microphone array, different channels each relating to one of a plurality of microphone devices may be used to obtain information concerning the origin of a sound signal. In addition, or as an alternative, information concerning the position of the vehicle user may be obtained on the basis of non-acoustical signals, such as optical signals, ultrasonic signals, or radio signals. By this means, it is possible to locate the vehicle user before the vehicle user speaks a voice command. This significantly enhances the detection and subsequent recognition of the voice command.

Preferably, the information concerning the position of the vehicle user is obtained by means of an already existing system suitable for monitoring the environment of a vehicle. In particular, such a system may be a so-called keyless-go-system typically used for unlocking the doors of a vehicle when the vehicle user approaches. Other possibilities are an optical imaging system, e.g. relating to a parking-assistance system or to a driver-assistance system, a laser-scanner system, and the like. The use of a laser-scanner system allows for a highly precise detection of the position of the vehicle user.

According to a further embodiment, the position of the vehicle user is taken into account during detecting the sound signal by using a microphone array in connection with a beam-forming method. By means of the beam-forming method, a sound-detection zone of the microphone array can be directed toward the position of a vehicle user. By this means, the detection of the sound signal can be precisely adapted to the position of the vehicle user.

In a further embodiment, multiple microphone devices are provided for detecting the sound signal and preferably positioned at different locations on the vehicle. In this case, the microphone devices may be selectively activated or deactivated depending on the position of a vehicle user. For example, only the microphone device located closest to the position of the vehicle user may be used for detecting the sound signal. The other microphone devices may be inactive or may be used as a source of reference signals.

According to a further embodiment, means for detecting the sound signal and/or means for identifying the voice command are activated only when the position of the vehicle user is within a predetermined area, e.g. the operating range of a keyless-go-system. In this way, it can be excluded that a false detection of voice signal occurs when the vehicle user is not near the vehicle, e.g. by accidentally detected speech originating from other persons. It is also possible to exclude specific voice commands from identification when the vehicle user is not located in a specific area. For example, a voice command for opening or closing of a back door of the vehicle can be enabled only for the case that the vehicle user is located near the rear of the vehicle.

As already mentioned, the voice command is preferably used to control a vehicle function, such as opening or closing of a vehicle door, such as a back door.

According to a further embodiment, the method also comprises identifying the vehicle user on the basis of the detected sound signal. In this way, it can be further ensured that the vehicle user is authorized to control certain vehicle functions. Identifying of the vehicle user can be accomplished by a keyless-go-system or by a voice processing system which also provides the function of identifying the voice command.

According to a further aspect of the invention, a system for processing voice commands in a vehicle environment is provided. The system comprises sound detecting means for detecting a sound signal in the vehicle environment, first processing means for retrieving a position information relating to the position of a vehicle user outside the vehicle and second processing means for identifying a voice command, which originates from the vehicle user, in the detected sound signal. The system is configured in such a manner that detecting of the sound signal and/or identifying of the voice command is accomplished taking into account said position information. As explained above, taking into account the position of the vehicle user allows for a significantly improved reliability in the process of detecting and recognizing the voice command. The system preferably also comprises or is coupled to means for detecting the position of the vehicle user, which may be supplied with signals from a radio device, an ultrasonic device, an optical imaging device, a laser scanner, or a microphone array or may even comprise at least one of these devices.

In one embodiment, the sound detecting means comprise a microphone array and beam-forming means configured to direct a sound-detection zone of the microphone array toward the position of the vehicle user. By this means, the receiving characteristics of the microphone array can be precisely adapted to the position of the vehicle user.

According to a further embodiment, the second processing means are configured to identify the voice command taking into account information from an optical imaging device, e.g. a camera monitoring the outside area of the vehicle. In particular, the camera may be used to detect the face of the vehicle user and motion of the lips of the vehicle user can be evaluated. That is to say, the processing means may utilize a combination of acoustical voice recognition and optical image analysis of a lip-reading type to identify the voice command. For example, if no lip motion is detected by the imaging device, a detected sound signal may be discarded. However, it could also be possible to evaluate the motion of the lips in more detail. In any case, the additional use of image information improves the reliability of voice recognition. The second processing means may also be configured to identify the vehicle user on the basis of the detected sound signal.

The invention further provides a motor vehicle which is equipped with the above-mentioned voice processing system according to the invention or is otherwise configured to implement the above method according to the invention. The motor vehicle preferably comprises additional systems which are used in connection with the voice processing system so as to improve the reliability of voice recognition. In particular, the motor vehicle may comprise a keyless-go-system which communicates with the voice processing system so as to provide information on the position of the vehicle user. The motor vehicle may also comprise a parking-assistance system, the parking-assistance system communicating with the voice processing system so as to provide information on the position of the vehicle user. The motor vehicle may also comprise any other type of system suitable for monitoring the vehicle environment and which communicates with the voice processing system so as to provide information on the position of the vehicle user. Such a monitoring system may also include optical imaging devices such as cameras or laser scanners which allow for a highly precise detection of the position of the vehicle user or may be used to provide other valuable information. In particular, the voice processing system may be provided with additional image information so as to supplement the acoustical voice recognition with an image analysis of the lip-reading type.

These and other aspects of the invention will become apparent from the embodiments described hereinafter.

In the drawings
Fig. 1 shows a schematic view of a vehicle equipped with a voice processing system according to the invention;
Fig. 2 is a block diagram illustrating a voice processing system according to an embodiment of the invention;
Fig. 3 is a block diagram illustrating a voice processing system according to a further embodiment of the invention; and
Fig. 4 shows a flow chart of a method for processing voice commands according to an embodiment of the invention.

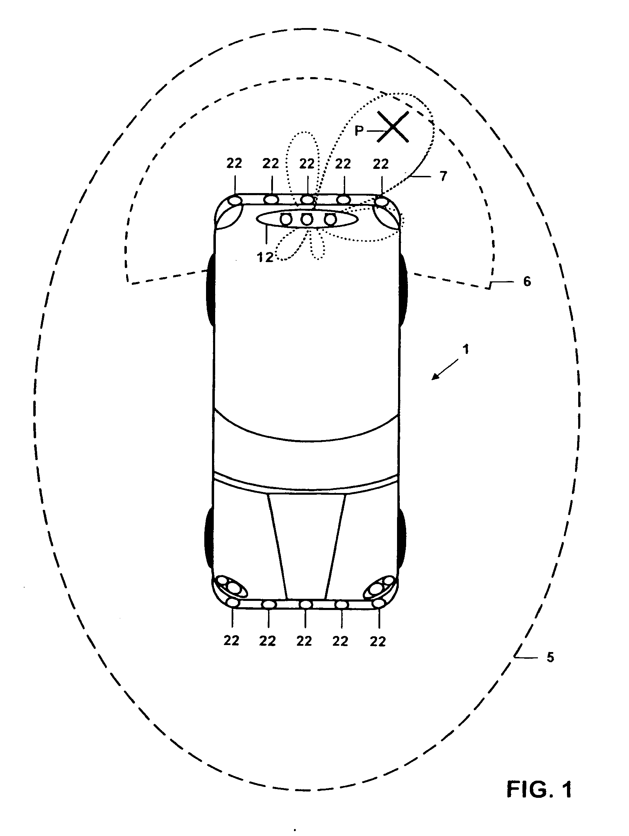

In Fig. 1, a motor vehicle 1 is illustrated, which is equipped with a voice processing system. As illustrated, the motor vehicle 1 is equipped with systems which allows for detecting the position of a vehicle user. In the figure, the position of the vehicle user is indicated by a cross denoted by P.

The motor vehicle 1 is equipped with a keyless-go-system. The keyless-go-system allows the vehicle user to lock, unlock and start the motor vehicle without using a conventional key. For the keyless-go-system, the vehicle user has a code card which is detected when the vehicle user approaches the motor vehicle 1. The range of detection for detecting the code card in the vehicle environment is denoted by the long dashed line 5. The detection is accomplished on the basis of radio signals. By transmitting radio signals, a key code is transmitted between the code card and the motor vehicle 1 so as to identify an authorized vehicle user. Of course, other means than a code card may be used by the keyless-go-system for identifying an authorized vehicle user, for example a chip embedded in a conventional key.

The motor vehicle 1 is further equipped with a parking-assistance system. The parking-assistance system comprises a plurality of sensors 22 which are arranged to detect obstacles in the vicinity of the vehicle. The parking-assistance system may use different types of sensors, including ultrasonic sensors and optical sensors, such as camera devices. In the illustrated example, the sensors 22 are arranged along the front and rear bumpers of the motor vehicle. The range of detection of the sensors 22 in the rear bumper is indicated by the short dashed line denoted by 6. By combining the measurements obtained using the plurality of sensors 22, it is possible to determine the position P of the vehicle user within the range of detection 6. The same applies for the range of detection of the sensors 22 arranged in the front bumper, which range however is not illustrated in the figure.

Further, the motor vehicle 1 is equipped with a microphone system 12 which allows for detecting sound signals in the vehicle environment. In the illustrated example, the microphone system 12 comprises or generally consists of a microphone array which allows for directing a sound-detection zone, i.e. a zone of increased sensitivity of the microphone array, into a specific direction. The sound-detection zone of the microphone array is schematically illustrated by the dotted line denoted by 7. In particular, it is possible to direct the sound-detection zone toward the position P of the vehicle user.

In connection with the microphone system 12, the keyless-go-system has a function for identifying the vehicle user on the basis of detected sound signals, i.e. by identifying the individual voice pattern of the vehicle user. Thereby a supplemental or alternative function for verifying the vehicle user's authorization is provided.

In addition, it is also possible to detect the position P of the vehicle user by means of the microphone array. In particular, the microphone array comprises a plurality of microphone devices, and by evaluating the output signals of the different microphone devices taking into account their specific locations, the position P of the vehicle user can calculated.

In the illustrated example, the microphone system 12 is used to detect voice commands originating from the vehicle user so as to control at least one vehicle function. In particular, such a function may be opening, closing, locking, and/or unlocking of a vehicle door, in particular the back door, e.g. a lift gate or a tail gate. This may significantly facilitate loading and unloading the motor vehicle 1. Namely, the vehicle user may use both hands to carry items to be stored in the vehicle. Consequently, it is not possible for the vehicle user to open, close, lock or unlock a vehicle door by means of a conventional key without putting down the item to be stored in the motor vehicle 1. Therefore, it is a significant advantage for the vehicle user to have the possibility of opening, closing, unlocking and/or locking the vehicle door by means of a voice command. This does not only apply to the back door of the motor vehicle 1, but also to other vehicle doors, depending on the vehicle type. The vehicle doors to be controlled by means of the voice command are suitably automated.

The general operation of the voice processing system in the motor vehicle 1 is as follows: By means of the keyless-go-system, it is detected whether or not the vehicle user approaches the motor vehicle 1. If the vehicle user is within the range of detection 5 of the keyless-go-system, the microphone system 12 is activated so as to detect a voice command originating from the vehicle user. The keyless-go-system not only allows for detecting the presence of the vehicle user within the detection range 5, but also allows for localizing the vehicle user within the detection range 5. In particular, it can be distinguished whether the vehicle user approaches from the left side of the motor vehicle, from the right side of the motor vehicle, from the rear side of the motor vehicle or from the front side of the motor vehicle. Therefore, the keyless-go-system provides information on the position P of the vehicle user.

Additional information on the position P of the vehicle user is obtained by means of the parking-assistance system, i.e. by means of the sensors 22, and by means of the microphone system 12.

Having detected the presence of the vehicle user in the vehicle environment and having determined the position P of the vehicle user, the microphone system 12 is adjusted to the position P of the vehicle user. For example, this may be accomplished by simply activating or deactivating microphone devices of the microphone system. In particular, microphone devices which are located near the vehicle user may be activated whereas other microphone devices which are located further away from the vehicle user are deactivated or are used as a source of reference signals for compensating noise which is present in the vehicle environment.

Preferably, the microphone system 12 comprises a microphone array having a plurality of microphone devices arranged in a well-defined spatial relationship. With such a microphone array it is possible to use a beam-forming method so as to adapt the microphone system 12 to the position P of the vehicle user. In particular, a sound-detection zone of the microphone array can be precisely directed toward the position of the vehicle user, as schematically illustrated in Fig. 1.

The above-described approach of processing voice command allows for a high reliability of voice recognition in the vehicle environment. In particular, the effects of noise present in the vehicle environment and of other disturbances can be significantly reduced.

Moreover, it is also possible to selectively activate or deactivate the control of certain vehicle functions depending on the position P of the vehicle user. For example, the control of the vehicle back door could be activated only if the position P of the vehicle user is in the rear area of the motor vehicle 1. By this means, many cases of false detection of voice commands or disturbances can be excluded, thereby further increasing the reliability of the voice processing system.

By identifying the vehicle user on the basis of the detected sound signal, the functionality of the system can be further enhanced. For example, the control of certain vehicle functions can be selectively activated or deactivated depending on the vehicle user's authorization. Moreover, it is possible to identify the individual giving the voice command and only accept voice commands from predefined individuals.

In the example of Fig. 1, the motor vehicle 1 is illustrated to have the keyless-go-system and the parking-assistance system, which allow for obtaining information on the position of the vehicle user. However, the motor vehicle 1 may also be equipped with other or additional systems which allow for determining the required position information.

For example, the motor vehicle 1 may be equipped with a laser-scanner system. Laser-scanner systems typically use a laser beam of the infrared spectrum for scanning the environment of a motor vehicle in a generally circumferential pattern. The laser-scanner system may be used in a parking-assistance system or in a driver-assistance system, e.g. for detecting objects on or near the road or for automatic control of the vehicle speed in stop-and-go situations. The laser-scanner system can be mounted behind the radiator cowling or be integrated in the front or rear bumpers, similar to the sensors 22.

As regards the detection of the position of the vehicle user, the laser-scanner system has the advantage of a large angular range of detection, a large radial range of detection and a high angular and radial resolution. The range of detection typically extends more than 10 m from the motor vehicle. Therefore, information obtained by means of a laser-scanner system is highly valuable in the voice processing system as described above.

In addition, the motor vehicle 1 may be equipped with optical imaging systems, e.g. a vehicle camera. In normal operation, the optical imaging system may be used for example to provide images of the rear area of the motor vehicle when driving backwards. In connection with the voice processing system, information obtained by means of the optical imaging system may be used to improve the reliability of the voice processing system.

First, it is possible to use the optical imaging system for determining the position of the vehicle user. Further, the processing of sound signals during voice recognition may be combined with an image analysis.

For example, it is possible to activate the voice processing system only when the optical imaging system detects a person and the lips of the person move. In case that several persons are within the image, the sound-detection zone of a microphone array can be directed toward the person which is speaking, i.e. whose lips are moving. Further improvements can be achieved by evaluating the motion of the lips in a more detailed manner and by using the results of this evaluation to supplement the voice recognition. Accordingly, the processing of acoustical signals can be combined with an image analysis of a "lip-reading type".

Further, it is possible to combine the information obtained by different monitoring systems of the motor vehicle, such as keyless-go-system, parking-assistance system, driver-assistance system or optical imaging system. For example, a coarse localization of the vehicle user can be accomplished by means of the keyless-go-system, and subsequently a more precise localization can be obtained by means of a laser-scanner system, an optical imaging system or other suitable type of monitoring system.

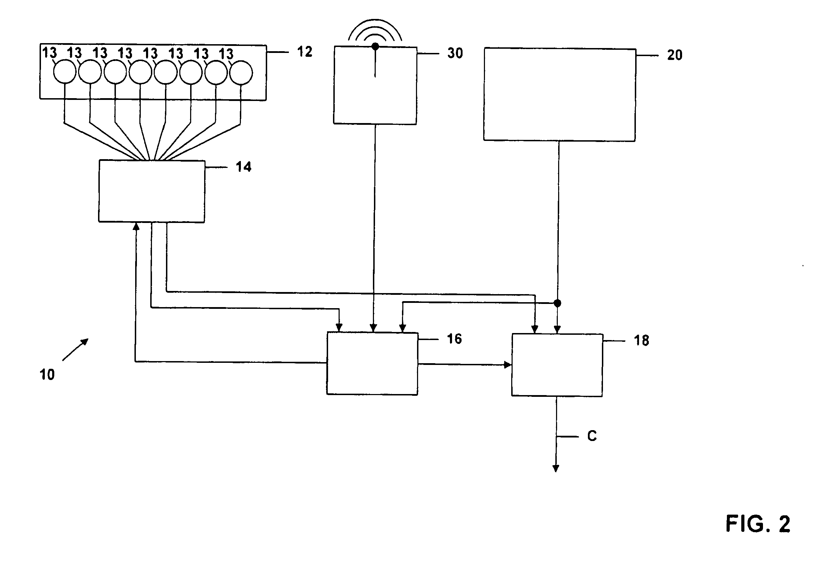

Fig. 2 illustrates in a block diagram the first example of a voice processing system 10. The voice processing system 10 comprises a first processing unit 16 for evaluating information or signals concerning the position of the vehicle user and a second processing unit 18 for evaluating sound signals detected by means of a microphone system 12. The second processing unit 18 generates a control signal C for controlling a vehicle function.

The voice processing system 10 further comprises the microphone system 12 and a control unit 14 of the microphone system. The microphone system 12 has the form of a microphone array comprising a plurality of microphone devices 13 arranged in a well-determined spatial relationship. The control unit 14 combines the sound signals detected by the different microphone devices 13 so as to supply a single sound signal to the second processing unit 18. In the control unit 14, a weight is assigned to each of the output signals of the microphone devices 13, and the weighted output signals are added so as to obtain the single sound signal as output from the control unit 14. The weights are adjusted on the basis of a position information signal supplied from the first processing unit 16.

The first processing unit 16 receives input signals which allow for determining the position of the vehicle user. These input signals are supplied from a keyless-go-system 30 and from a monitoring system 20. The monitoring system 20 may comprise an optical imaging system or a laser-scanner system. In addition, an input signal is supplied from the control unit 14. This is possible as the microphone array not only allows for directing a sound-detection zone toward a specific position, but also allows for determining the position of the source of a sound signal by evaluating the output signals of the different microphone devices 13.

The first processing unit 16 supplies a position-information signal to the second processing unit 18, which evaluates its input signals taking into account the position of the vehicle user as supplied from the first processing unit 16. The second processing unit 18 receives as its input signal the sound signal from the control unit 14 and an image information signal from the monitoring system 20. On the basis of the supplied input signals, the second processing unit 18 evaluates whether or not the sound signal supplied by the control unit 14 corresponds to a specific voice command. If a voice command is identified, the corresponding control signal C is generated. The input signals supplied from the first processing unit 16 and from the monitoring system 20 may also be used to activate or deactivate the second processing unit 18.

In addition, the detected sound signal may also be evaluated so as to identify the vehicle user. This may be accomplished by the second processing unit 18, which then provides corresponding information to the keyless-go-system 30. Of course, it is also possible to forward the detected sound signal to the keyless-go-system 30, which then performs the necessary processing for identifying the vehicle user.

It is to be understood that the keyless-go-system 30 and the monitoring system 20 not necessarily form parts of the voice processing system 10. Rather, they preferably constitute "already existing" systems which are suitable to provide information on the position of the vehicle user. The use of already existing systems for obtaining information on the position of the vehicle user allows to improve the reliability of the voice processing system 10 with a minimum of additional outlay.

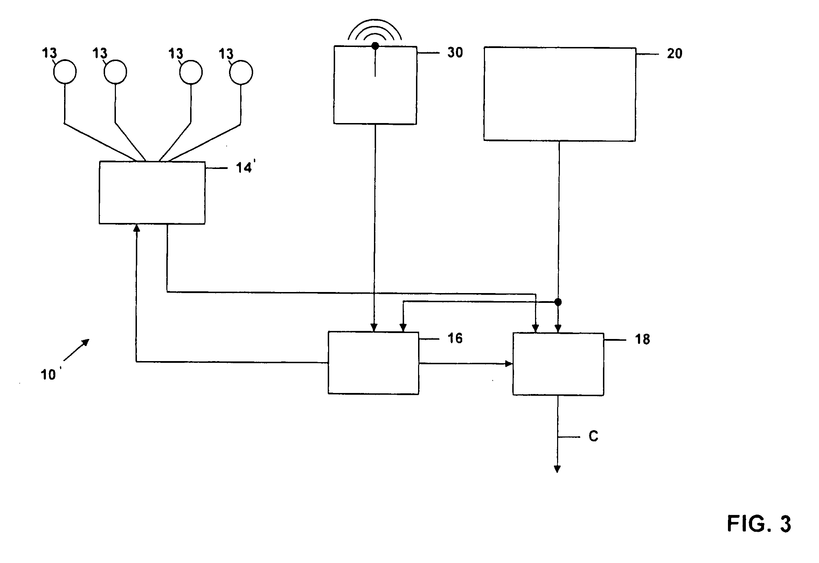

Fig. 3 shows a voice processing system 10' to a further example. The voice processing system 10' generally corresponds to that of Fig. 2, and similar components have been designated with the same reference signs.

As compared to the voice processing system 10 of Fig. 2, the voice processing system 10' of Fig. 3 comprises a plurality of separate microphone devices 13, which are connected to a control unit 14'. The microphone devices 13 are preferably located at different positions on the motor vehicle. The control unit 14' selectively supplies the output signal of one of the microphone devices 13 to the second processing unit 18, i.e. the control unit 14' selectively activates or deactivates the microphone devices 13 so as to supply their output signal to the second processing unit 18. This is accomplished on the basis of the position-information signal received from the first processing unit 16. For example, only that microphone device which is located closest to the position of the vehicle user may be activated. The other microphone devices will be deactivated. Alternatively, the output signals of the other microphone devices can also be supplied to the second processing unit 18 as reference signals and be used for compensating noise present in the vehicle environment.

It is to be understood that in the voice processing systems 10, 10' as illustrated in Figs. 2 and 3 the first processing unit 16 and the second processing unit 18 may be separate components but will typically be implemented by a suitable software running on a microprocessor. It may even be advantageous to have a single microprocessor which also implements functions of the keyless-go-system and/or of the monitoring system, thereby unifying the functions of the voice processing system and of other vehicle control systems in a single microprocessor. In this way, the need for additional hardware is reduced.

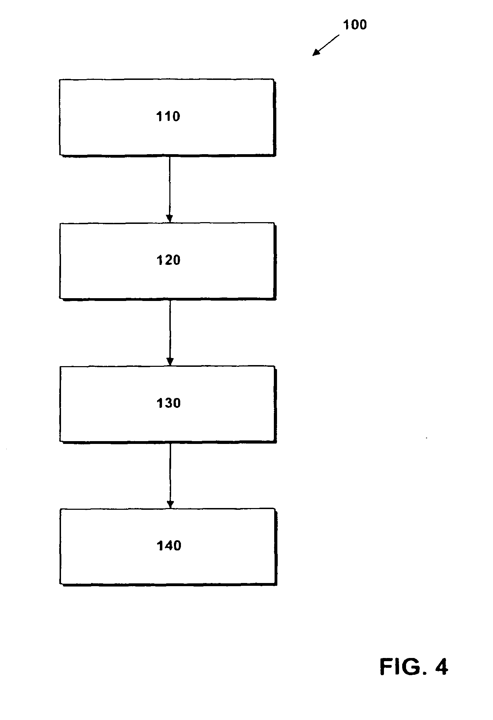

Fig. 4 illustrates a flow chart for a method of processing voice commands using the above-described voice processing system.

In step 110, the voice processing system is activated by a signal received from the keyless-go-system 30 indicating that the vehicle user approaches the motor vehicle 1.

In step 120, the position P of the vehicle user is determined. This is accomplished on the basis of information received from the keyless-go-system 30, the monitoring system 20 or the microphone system 12.

In step 130, the microphone system 12 is adapted to the determined position P of the vehicle user. This is accomplished by directing the sound-detection zone of the microphone array toward the position P of the vehicle user or by selectively activating or deactivating the microphone devices 13 depending on their location relative to the position P of the vehicle user.

In step 140, a voice recognition process is started so as to identify a voice command in the detected sound signal. If a voice command is identified, a corresponding control signal for controlling the vehicle function is generated. In step 140, image information provided by an optical imaging system of the monitoring system 20 may additionally be used so as to improve the reliability of voice recognition. Further, the step may also comprise identifying the vehicle user on the basis of the detected sound signal.

To summarize, a voice processing system and a voice processing method have been described which offer for an improved reliability of voice recognition. In particular, the influence of noise present in the vehicle environment on the recognition of voice commands spoken by the vehicle user is reduced. The required information concerning the position of the vehicle user can be obtained from monitoring systems already existing in the motor vehicle for other purposes, thereby minimizing the need for additional hardware.

## Claims

1. Method for processing voice commands in a vehicle environment, **characterized in that** the method comprises
detecting a sound signal in the vehicle environment, and
retrieving a position information relating to the position of a vehicle user outside the vehicle,
identifying a voice command, which originates from the vehicle user, in the detected sound signal,
wherein said detecting of the sound signal and/or said identifying of the voice command is accomplished taking into account said position information.

2. Method according to claim 1, **characterized in that**
the method comprises detecting the position of the vehicle user so as to generate said position information.

3. Method according to claim 2, **characterized in that**
the position of the vehicle user is detected by means of a keyless-go-system (30).

4. Method according to claim 2 or 3, **characterized in that**
the position of the vehicle user is detected by means of an optical imaging system.

5. Method according to any one of claims 2 to 4, **characterized in that**
the position of the vehicle user is detected by means of a laser-scanner system.

6. Method according to any one of claims 2 to 5, **characterized in that**
the position of the vehicle user is detected using a microphone array.

7. Method according to any one of claims 2 to 6, **characterized in that**
the position of the vehicle user is detected using sensors (22) of a parking-assistance system.

8. Method according to any one of the preceding claims, **characterized in that**
the sound signal is detected using a microphone array.

9. Method according to claim 8, **characterized in that**
the microphone array is used with a beam-forming method so as to direct a sound-detection zone of the microphone array toward the position of the vehicle user.

10. Method according to any one of the preceding claims, **characterized in that**
the identifying of the voice command is accomplished taking into account information from an optical imaging system.

11. Method according to any one of the preceding claims, **characterized in that**
multiple microphone devices (13) are provided for detecting the sound signal, and
the microphone devices (13) are selectively activated or deactivated depending on the position of the vehicle user.

12. Method according to claim 11, **characterized in that**
a microphone device (13) located near the position of the vehicle user is used for detecting the sound signal and the other microphone devices (13) are used as a source of reference signals.

13. Method according to any one of the preceding claims, **characterized in that**
means for detecting the sound signal and/or means for identifying the voice command are activated only when the position of the vehicle user is within a predetermined range (6).

14. Method according to any one of the preceding claims, **characterized in that**
the method comprises controlling a vehicle function in accordance with the identified voice command.

15. Method according to any one of the preceding claims, **characterized in that**
the method comprises identifying the vehicle user on the basis of the detected sound signal.

16. System for processing voice commands in a vehicle environment, **characterized by**
sound detecting means (12, 13, 14; 14') for detecting a sound signal in the vehicle environment,
first processing means (16) for retrieving a position information relating to the position of a vehicle user outside the vehicle,
second processing means (18) for identifying a voice command, which originates from a vehicle user, in the detected sound signal,
wherein said detecting of the sound signal and/or said identifying of the voice command is accomplished taking into account said position information.

17. System according to claim 16, **characterized in that**
the first processing means (16) are supplied with signals from a radio device, an ultrasonic device, an optical imaging device, a laser-scanner system, or a microphone array.

18. System according to claim 16 or 17, **characterized by**
means for detecting the position of the vehicle user.

19. System according to any one of claims 16 to 18, **characterized in that**
the sound detecting means comprise a microphone array (12) and beam-forming means (14) configured to direct a sound-detection zone of the microphone array (12) toward the position of the vehicle user.

20. System according to any one of claims 16 to 19, **characterized in that**
the sound detecting means comprise a plurality of microphone devices (13) and control means (14') configured to selectively activate or deactivate the microphone devices (13) depending on the position of the vehicle user.

21. System according to any one of claims 16 to 20, **characterized in that**
the second processing means (18) are configured to identify the voice command taking into account information from an optical imaging device.

22. System according to any one of claims 16 to 21, **characterized in that**
the second processing means (18) are configured to identify the vehicle user on the basis of the detected sound signal.

23. Motor vehicle, **characterized by**
a voice processing system (10, 10') according to any one of claims 16 to 22, wherein the voice command is used to control a vehicle function.

24. Motor vehicle according to claim 23, **characterized in that**
the motor vehicle (1) comprises a keyless-go-system (30), wherein the keyless-go-system (30) communicates with the voice processing system (10, 10') so as to provide information on the position of the vehicle user.

25. Motor vehicle according to claim 24, **characterized in that**
the keyless-go-system (30) is configured to identify the vehicle user on the basis of the detected sound signal

26. Motor vehicle according to any one of claims 23 to 25, **characterized in that**
the motor vehicle (1) comprises a monitoring system (20), wherein the monitoring system (20) communicates with the voice processing system (10, 10') so as to provide information on the position of the vehicle user.

27. Motor vehicle according to claim 26, **characterized in that**
the monitoring system (20) relates to a parking-assistance system or a driver-assistance system.

28. Motor vehicle according to claim 27, **characterized in that**
the monitoring system comprises an optical imaging device (20) and the optical imaging device (20) communicates with the voice processing system (10, 10') so as to provide image information.

## Patentansprüche

1. Verfahren zur Verarbeitung von Sprachkommandos in einer Fahrzeugumgebung, **dadurch gekennzeichnet, dass** das Verfahren umfasst:
Erfassen eines Schallsignals in der Fahrzeugumgebung und
Abrufen einer Positionsinformation, welche sich auf die Position eines Fahrzeugnutzers außerhalb des Fahrzeugs bezieht,
Identifizieren eines Sprachkommandos, welches von dem Fahrzeugnutzer stammt, in dem erfassten Schallsignal,
wobei das Erfassen des Schallsignal und/oder die Identifizierung des Sprachkommandos unter Berücksichtigung der Positionsinformation bewerkstelligt wird.

2. Verfahren nach Anspruch 1, **dadurch gekennzeichnet, dass**
das Verfahren ein Erfassen der Position des Fahrzeugnutzers zum Erzeugen der Positionsinformation umfasst.

3. Verfahren nach Anspruch 2, **dadurch gekennzeichnet, dass**
die Position des Fahrzeugnutzers mittels eines Keyless-Go-Systems (30) erfasst wird.

4. Verfahren nach Anspruch 2 oder 3, **dadurch gekennzeichnet, dass**
die Position des Fahrzeugnutzers mittels eines optischen Bildgebungssystems erfasst wird.

5. Verfahren nach einem der Ansprüche 2 bis 4, **dadurch gekennzeichnet, dass**
die Position des Fahrzeugnutzers mittels eines Laser-Scanner-Systems erfasst wird.

6. Verfahren nach einem der Ansprüche 2 bis 5, **dadurch gekennzeichnet, dass**
die Position des Fahrzeugnutzers unter Verwendung einer Mikrophonanordnung erfasst wird.

7. Verfahren nach einem der Ansprüche 2 bis 6, **dadurch gekennzeichnet, dass**
die Position des Fahrzeugnutzers unter Verwendung von Sensoren (22) eines Parkassistenzsystems erfasst wird.

8. Verfahren nach einem der vorhergehenden Ansprüche, **dadurch gekennzeichnet, dass**
das Schallsignal unter Verwendung einer Mikrophonanordnung erfasst wird.

9. Verfahren nach Anspruch 8, **dadurch gekennzeichnet, dass**
die Mikrophonanordnung mit einem Strahlformungsverfahren verwendet wird, um einen Schallerfassungsbereich der Mikrophonanordnung in Richtung der Position des Fahrzeugnutzers zu richten.

10. Verfahren nach einem der vorhergehenden Ansprüche, **dadurch gekennzeichnet, dass**
das Identifizieren des Sprachkommandos unter Berücksichtigung von Informationen aus einem optischen Bildgebungssystem bewerkstelligt wird.

11. Verfahren nach einem der vorhergehenden Ansprüche, **dadurch gekennzeichnet, dass**
mehrere Mikrophonvorrichtungen (13) zum Erfassen des Schallsignals vorgesehen sind, und
die Mikrophonvorrichtungen (13) abhängig von der Position des Fahrzeugnutzers selektiv aktiviert oder deaktiviert werden.

12. Verfahren nach Anspruch 11, **dadurch gekennzeichnet, dass**
eine Mikrophonvorrichtung (13), welche sich nahe der Position des Fahrzeugnutzers befindet, zum Erfassen des Schallsignals verwendet wird, und die anderen Mikrophonvorrichtungen (13) als eine Quelle für Referenzsignale verwendet werden.

13. Verfahren nach einem der vorhergehenden Ansprüche, **dadurch gekennzeichnet, dass**
Mittel zum Erfassen des Schallsignals und/oder Mittel zum Identifizieren des Sprachkommandos nur aktiviert werden, wenn die Position des Fahrzeugnutzers innerhalb eines vorbestimmten Bereichs (6) ist.

14. Verfahren nach einem der vorhergehenden Ansprüche, **dadurch gekennzeichnet, dass**
das Verfahren ein Steuern einer Fahrzeugfunktion in Übereinstimmung mit dem identifizierten Sprachkommando umfasst.

15. Verfahren nach einem der vorhergehenden Ansprüche, **dadurch gekennzeichnet, dass**
das Verfahren ein Identifizieren des Fahrzeugnutzers auf Basis des erfassten Schallsignals umfasst.

16. System zur Verarbeitung von Sprachkommandos in einer Fahrzeugumgebung, **gekennzeichnet durch**
Schallerfassungsmittel (12, 13, 14; 14') zum Erfassen eines Schallsignals in der Fahrzeugumgebung,
erste Verarbeitungsmittel (16) zum Abrufen einer Positionsinformation, welche sich auf die Position eines Fahrzeugnutzers außerhalb des Fahrzeugs bezieht,
zweite Verarbeitungsmittel (18) zum Identifizieren eines Sprachkommandos, welches von einem Fahrzeugnutzer stammt, in dem erfassten Schallsignal,
wobei das Erfassen des Schallsignals und/oder das Identifizieren des Sprachkommandos unter Berücksichtigung der Positionsinformation erfolgt.

17. System nach Anspruch 16, **dadurch gekennzeichnet, dass**
den ersten Verarbeitungsmitteln (16) Signale aus einer Funkvorrichtung, einer Ultraschallvorrichtung, einer optischen Bildgebungsvorrichtung, einem Laser-Scanner-System oder einer Mikrophonanordnung zugeführt sind.

18. System nach Anspruch 16 oder 17, **gekennzeichnet durch**
Mittel zum Erfassen der Position des Fahrzeugnutzers.

19. System nach einem der Ansprüche 16 bis 18, **dadurch gekennzeichnet, dass**
die Schallerfassungsmittel eine Mikrophonanordnung (12) und Strahlformungsmittel (14), welche dazu ausgestaltet sind, einen Schallerfassungsbereich der Mikrophonanordnung (12) in Richtung der Position des Fahrzeugnutzers zu richten, umfassen.

20. System nach einem der Ansprüche 16 bis 19, **dadurch gekennzeichnet, dass**
die Schallerfassungsmittel eine Vielzahl von Mikrophonvorrichtungen (13) und Steuermittel (14'), welche dazu ausgestaltet sind, die Mikrophonvorrichtungen (13) abhängig von der Position des Fahrzeugnutzers selektiv zu aktivieren oder deaktivieren, umfassen.

21. System nach einem der Ansprüche 16 bis 20, **dadurch gekennzeichnet, dass**
die zweiten Verarbeitungsmittel (18) dazu ausgestaltet sind, das Sprachkommando unter Berücksichtigung von Informationen aus einer optischen Bildgebungsvorrichtung zu identifizieren.

22. System nach einem der Ansprüche 16 bis 21, **dadurch gekennzeichnet, dass**
die zweiten Verarbeitungsmittel (18) dazu ausgestaltet sind, den Fahrzeugnutzer auf Basis des erfassten Schallsignals zu identifizieren.

23. Kraftfahrzeug, **gekennzeichnet durch**
ein Sprachverarbeitungssystem (10, 10') nach einem der Ansprüche 16 bis 22,
wobei das Sprachkommando zur Steuerung einer Fahrzeugfunktion verwendet wird.

24. Kraftfahrzeug nach Anspruch 23, **dadurch gekennzeichnet, dass**
das Kraftfahrzeug (1) ein Keyless-Go-System (30) umfasst, wobei das Keyless-Go-System (30) mit dem Sprachverarbeitungssystem (10, 10') kommuniziert, um Informationen bezüglich der Position des Fahrzeugnutzers bereitzustellen.

25. Kraftfahrzeug nach Anspruch 24, **dadurch gekennzeichnet, dass**
das Keyless-Go-System (30) dazu ausgestaltet ist, den Fahrzeugnutzer auf Basis des erfassten Schallsignals zu identifizieren.

26. Kraftfahrzeug nach einem der Ansprüche 23 bis 25, **dadurch gekennzeichnet, dass**
das Kraftfahrzeug (1) ein Überwachungssystem (20) umfasst, wobei das Überwachungssystem (20) mit dem Sprachverarbeitungssystem (10, 10') kommuniziert, um Informationen bezüglich der Position des Fahrzeugnutzers bereitzustellen.

27. Kraftfahrzeug nach Anspruch 26, **dadurch gekennzeichnet, dass**
das Überwachungssystem (20) zu einem Parkassistenzsystem oder einem Fahrerassistenzsystem gehört.

28. Kraftfahrzeug nach Anspruch 27, **dadurch gekennzeichnet, dass**
das Überwachungssystem eine optische Bildgebungsvorrichtung (22) umfasst und die optische Bildgebungsvorrichtung (20) mit dem Sprachverarbeitungssystem (10, 10') kommuniziert, um Bildinformationen bereitzustellen.

## Revendications

1. Procédé pour le traitement de commandes vocales dans l'environnement d'un véhicule, **caractérisé en ce que** le procédé comprend les étapes consistant à :
détecter un signal sonore dans l'environnement du véhicule ; et
retrouver des informations de position relatives à la position d'un utilisateur du véhicule à l'extérieur du véhicule ;
identifier une commande vocale émanant de l'utilisateur du véhicule, dans le signal sonore détecté,
dans lequel ladite détection du signal sonore et / ou ladite identification de la commande vocale sont accomplies en prenant en compte lesdites informations de position.

2. Procédé selon la revendication 1, **caractérisé en ce que :**
le procédé comprend l'étape consistant à détecter la position de l'utilisateur du véhicule de façon à générer lesdites informations de position.

3. Procédé selon la revendication 2, **caractérisé en ce que :**
la position de l'utilisateur du véhicule est détectée au moyen d'un système de démarrage sans clé (« keyless go ») (30).

4. Procédé selon la revendication 2 ou 3, **caractérisé en ce que :**
la position de l'utilisateur du véhicule est détectée au moyen d'un système d'imagerie optique.

5. Procédé selon l'une quelconque des revendications 2 à 4, **caractérisé en ce que :**
la position de l'utilisateur du véhicule est détectée au moyen d'un système à balayage laser.

6. Procédé selon l'une quelconque des revendications 2 à 5, **caractérisé en ce que :**
la position de l'utilisateur du véhicule est détectée au moyen d'un ensemble de microphones.

7. Procédé selon l'une quelconque des revendications 2 à 6, **caractérisé en ce que :**
la position de l'utilisateur du véhicule est détectée au moyen de capteurs (22) d'un système d'assistance au stationnement.

8. Procédé selon l'une quelconque des revendications précédentes, **caractérisé en ce que :**
le signal sonore est détecté au moyen d'un ensemble de microphones.

9. Procédé selon la revendication 8, **caractérisé en ce que :**
l'ensemble de microphones est utilisé avec un procédé de formage de faisceau de façon à diriger une zone de détection sonore de l'ensemble de microphones vers la position de l'utilisateur du véhicule.

10. Procédé selon l'une quelconque des revendications précédentes, **caractérisé en ce que :**
l'identification de la commande vocale est accomplie en prenant en compte des informations en provenance d'un système d'imagerie optique.

11. Procédé selon l'une quelconque des revendications précédentes, **caractérisé en ce que :**
plusieurs dispositifs de microphone (13) sont prévus afin de détecter le signal sonore, et
les dispositifs de microphone (13) sont activés ou désactivés de façon sélective en fonction de la position de l'utilisateur du véhicule.

12. Procédé selon la revendication 11, **caractérisé en ce que :**
un dispositif de microphone (13) qui se trouve à proximité de la position de l'utilisateur du véhicule est utilisé pour détecter le signal sonore, tandis que les autres dispositifs de microphone (13) sont utilisés en tant qu'une source de signaux de référence.

13. Procédé selon l'une quelconque des revendications précédentes, **caractérisé en ce que :**
des moyens pour détecter le signal sonore et / ou des moyens pour identifier la commande vocale sont activés uniquement quand la position de l'utilisateur du véhicule se situe à l'intérieur d'une plage prédéterminée (6).

14. Procédé selon l'une quelconque des revendications précédentes, **caractérisé en ce que :**
le procédé comprend l'étape consistant à commander une fonction du véhicule en accord avec la commande vocale identifiée.

15. Procédé selon l'une quelconque des revendications précédentes,
**caractérisé en ce que :**
le procédé comprend l'étape consistant à identifier l'utilisateur du véhicule sur la base du signal sonore détecté.

16. Système pour le traitement de commandes vocales dans l'environnement d'un véhicule, **caractérisé par** :
des moyens de détection sonore (12, 13, 14 ; 14') pour détecter un signal sonore dans l'environnement du véhicule ;
des premiers moyens de traitement (16) pour retrouver des informations de position relatives à la position d'un utilisateur du véhicule à l'extérieur du véhicule ;
des deuxièmes moyens de traitement (18) pour identifier une commande vocale émanant d'un utilisateur du véhicule, dans le signal sonore détecté,
dans lequel ladite détection du signal sonore et / ou ladite identification de la commande vocale sont accomplies en prenant en compte lesdites informations de position.

17. Système selon la revendication 16, **caractérisé en ce que :**
les premiers moyens de traitement (16) reçoivent des signaux en provenance d'un dispositif radio, un dispositif ultrasonore, un dispositif d'imagerie optique, un système à balayage laser, ou un ensemble de microphones.

18. Système selon la revendication 16 ou 17, **caractérisé par** :
des moyens pour détecter la position de l'utilisateur du véhicule.

19. Système selon l'une quelconque des revendications 16 à 18, **caractérisé en ce que :**
les moyens de détection sonore comprennent un ensemble de microphones (12) et des moyens de formage de faisceau (14) qui sont configurés pour diriger une zone de détection sonore de l'ensemble de microphones (12) vers la position de l'utilisateur du véhicule.

20. Système selon l'une quelconque des revendications 16 à 19, **caractérisé en ce que :**
les moyens de détection sonore comprennent plusieurs dispositifs de microphone (13) et des moyens de commande (14') qui sont configurés pour activer ou désactiver de façon sélective les dispositifs de microphone (13) en fonction de la position de l'utilisateur du véhicule.

21. Système selon l'une quelconque des revendications 16 à 20, **caractérisé en ce que :**
les deuxièmes moyens de traitement (18) sont configurés pour identifier la commande vocale en prenant en compte des informations en provenance d'un dispositif d'imagerie optique.

22. Système selon l'une quelconque des revendications 16 à 21, **caractérisé en ce que :**
les deuxièmes moyens de traitement (18) sont configurés pour identifier l'utilisateur du véhicule sur la base du signal sonore détecté.

23. Véhicule à moteur, **caractérisé par** un système pour le traitement de commandes vocales (10, 10') selon l'une quelconque des revendications 16 à 22, dans lequel la commande vocale est utilisée afin de commander une fonction du véhicule.

24. Véhicule à moteur selon la revendication 23, **caractérisé en ce que :**
le véhicule à moteur (1) comprend un système de démarrage sans clé (« keyless go ») (30), dans lequel le système de démarrage sans clé (30) communique avec le système de traitement de commandes vocales (10, 10') de façon à fournir des informations relatives à la position de l'utilisateur du véhicule.

25. Véhicule à moteur selon la revendication 24, **caractérisé en ce que :**
le système de démarrage sans clé (30) est configuré pour identifier l'utilisateur du véhicule sur la base du signal sonore détecté.

26. Véhicule à moteur selon l'une quelconque des revendications 23 à 25, **caractérisé en ce que :**
le véhicule à moteur (1) comprend un système de surveillance (20), dans lequel le système de surveillance (20) communique avec le système de traitement de commandes vocales (10, 10') de façon à fournir des informations relatives à la position de l'utilisateur du véhicule.

27. Véhicule à moteur selon la revendication 26, **caractérisé en ce que :**
le système de surveillance (20) concerne un système d'assistance au stationnement ou un système d'assistance à la conduite.

28. Véhicule à moteur selon la revendication 27, **caractérisé en ce que :**
le système de surveillance comprend un système d'imagerie optique (20), et le système d'imagerie optique (20) communique avec le système de traitement de commandes vocales (10, 10') de façon à fournir des informations d'image.
